# EUROPEAN PATENT SPECIFICATION

(11) **EP 1 603 407 B1**
(45) Date of publication and mention of the grant of the patent: **29.10.2008**
(21) Application number: 04721243.6
(22) Date of filing: 17.03.2004
(51) Int. Cl.: A23L 1/217, A23L 1/00

(54) **POTATO BASED FOOD PRODUCT**
LEBENSMITTEL AUF KARTOFFELBASIS
PRODUIT ALIMENTAIRE A BASE DE POMME DE TERRE

(30) Priority: 19.03.2003 GB 0306317
(43) Date of publication of application: 14.12.2005
(73) Proprietor: MCCAIN FOODS(GB) LIMITED, North Yorkshire, YO11 3BS (GB)
(72) Inventor: HOWARD, John, G., Kings Lynn, Norflok PE31 6GW (GB); HUME, Pamela, McCain Foods (GB) Limited, Scarborough, North Yorkshire YO11 3BS (GB)
(74) Representative: Gray, James
(86) International application number: PCT/GB2004/001136
(87) International publication number: WO 2004/082400

(56) References cited:
- WO-A-03/026443
- US-A- 5 891 494
- US-A- 5 976 607
- US-A- 6 132 785
- US-A1- 2002 132 035
- J.B.ROSSEL: "Frying: Improving Quality" 2001, CRC PRESS , USA , XP002283441 Part III - Chapter 9 paragraphs [9.5.4] - [9.5.6]

## Description

The present invention relates to the preparation of a food product and in particular to the preparation of a potato based food product.

One method of preparing par-cooked potato product, such as chips or fries, is to wash, cut and blanch the raw potato, dry the blanched potato pieces by about 10% and par fry the pieces in oil for around 3 minutes a temperature of about 140°C. The chips are subsequently cooled and bagged ready for chilling or freezing. The par-cooked chips or fries are typically fried in oil once again by the end consumer to complete the cooking process. This method permits the rapid preparation of chips or fries by the end user, which fries or chips have an acceptable taste and mouth feel. The oil frying steps results in chips or fries with a relatively high fat content which it would be desirable to reduce.

US 5976607 discloses a water dispersible coating composition for fat fried foods containing a starch, a stabilising agent, an acid salt and a leavening agent. The coated composition is used in conjunction with the frying of articles in vegetable oil which consequently increases their fat content. US2002/0132035 discloses an oil or fat composition which can be used in a variety of products including margarine, ice cream and chocolate spread. US 5891494 discloses a potato product having an emulsion coating which is steam treated, the product being steam treated before the application of the coating thereto. US 6132785 discloses an improved batter coating for french fried potato strips which again require an oil frying step during the preparation of the strips. WO03/026443 discloses a method of preparing a potato base food product wherein the products are provided with an emulsion coating.

According to the present invention there is provided a method of preparing a potato based food product, the method comprising the steps of:
processing potatoes into potato articles having a desired size and shape,
drying said potato articles,
coating said potato articles in an emulsion containing starch, oil, salt and colouring,
introducing said coated articles into a hot air environment; and
removing said articles from said hot air environment, characterised in that the method further includes between the processing and drying steps, the steps of
blanching said potato articles by immersion in a heated water bath, and
dipping said blanched potato articles in a solution to prevent non-enzymic oxidation of the potato articles.

The step of processing said potatoes typically comprises steam peeling, trimming to remove any defects and cutting to a desired size. Preferably the potatoes are cut into elongate sticks known variously as chips or fries. Chips typically have a substantially square cross-section of between 8 mm to 15 mm In a preferred embodiment the potatoes are cut into a chip size 11.2 mm by 11.2 mm (15/32 of an inch by 15/32 of an inch).

The blanching temperature may be in the range of 70°C to 95°C. The blanching time may be in the range of 5 minutes to 20 minutes. It will be appreciated that the blanching temperature and time will be at least partially dependent on such factors as the potato variety and the size of the potato articles.

The step of dipping said blanched potato articles in a solution to prevent non-enzymic oxidation of the potato articles may comprise immersing the articles in a Sodium Acid Pyrophosphate solution. The solution may comprise 1% Sodium Acid Pyrophosphate. The solution may be at a temperature of 65°C and the articles may be immersed for a time period of around 60 seconds.

The step of drying the blanched and dipped potato articles may in one embodiment comprise introducing the articles into an elevated temperature environment. In such an embodiment the articles may be introduced into a warm air environment such as a drying oven. The elevated temperature may be in the range of 90°C to 120°C. The articles may be dried for a time period of around 4 minutes and may during this drying step experience a drying weight loss of around 4.5%.

Alternatively the blanched and dipped potato articles may be allowed to dry at ambient temperature. In such an embodiment the articles may be allowed to dry at ambient temperature for around ten minutes.

The step of coating the articles may be achieved by any suitable means such as, for example, an appropriately configured enrobing device. The starch containing emulsion also includes oil and salt. The emulsion may include more than one kind of starch. The emulsion also includes a colouring. The colouring may preferably include paprika.

In one embodiment the emulsion may comprise a mixture comprising water, oil, starch, colouring, emulsifier, stabilizer and salt. In such an embodiment the oil may be sunflower oil and the starch Hylon VII (food starch refined from high amylose maize). The colouring may comprise turmeric and paprika. The emulsifier may comprise Hamultop 391 emulsifier (whey protein concentrate and buttermilk powder) and the stabilizer H0w 1 stabilizer (guar gum/xanthan gum stabilizer). The emulsion in such an embodiment may comprises the above referenced components in the following proportions:

| | |
|---|---|
| Water | 53.00% - 60.00% |
| Sunflower Oil | 24.00% - 28.00% |
| Food Starch refined from High Amylose Maize - Hylon VII | 10.00% - 12.00% |
| Tumeric | 0.01 % - 0.10% |
| Liquid Paprika | 0.01 % - 0.10% |
| Whey Protein Concentrate and Buttermilk Powder Emulsifier - Hamultop 391 | 0.80% - 1.00% |
| Guar Gum and Xanthan Gum Stabiliser - H0w 1 | 0.10% - 0.30% |
| Salt | 4.00% - 6.00% |

In an alternative embodiment the emulsion may comprise a mixture comprising water, oil, starch, flour, dextrin, gum, Sodium Bicarbonate, salt, colouring, oil, Sodium Acid Pyrophosphate and dextrose. The starch element may comprise more than one type of starch. In such an embodiment the starch element of the emulsion may comprise a combination of potato starch and maize starch. The gum may comprise a combination of more than one gum. In such an embodiment the gum may comprise a combination of Guar gum and Xantham gum. The colouring may comprise a combination of Tumeric and Paprika. More specifically the emulsion may comprise a combination of modified potato starch, rice flour, potato dextrin, maize starch, xantham gum, sodium bicarbonate, Puron AG (Disodium Diphosphate), salt, turmeric extract powder, paprika oleoresin, vegetable oil, dextrose and guar gum. The emulsion in such an embodiment may comprises the above referenced components in the following proportions:

| | |
|---|---|
| Water | 48.00% - 54.00% |
| Sunflower oil | 13.00% - 16.00% |
| Distarch Phosphate -Modified potato starch E1412 | 9.00% - 11.00% |
| Rice Flour | 5.00% - 7.00% |
| Potato Dextrin | 9.00% - 11.00% |
| Maize Starch | 4.00% - 6.00% |
| Xantham Gum | 0.01% - 0.10% |
| Sodium Bicarbonate | 0.30% - 0.40% |
| Disodium Diphosphate | 0.40% - 0.50% |
| Salt | 1.00% - 2.00% |
| Tumeric Extract Powder | 0.01% - 0.10% |
| Paprika Oleoresin | 0.01% - 0.10% |
| Vegetable Oil | 0.01% - 0.10% |
| Dextrose | 0.30% - 0.40% |
| Guar Gum | 0.01% - 0.10% |

The coating of the articles may be quantified with reference to the pick-up percentage by weight of the emulsion by the potato articles. The pick up percentage may be in the range of 5% to 20%. More preferably the pick up percentage may be in the range of 6% to 17%.

The method may optionally include the additional step of drying the potato articles for a second time after they have been coated in the emulsion. This second drying step may comprise introducing the coated articles into a warm air environment. The articles may be dried at a temperature of between 100°C and 130°C. More preferably the coated articles may be dried at a temperature of between 105°C and 120°C. In one embodiment the articles may be dried for a period of between 20 to 35 minutes. In an alternative embodiment the articles may be dried for 20 minutes. The second drying step may be quantified with reference to the weight loss of the coated articles during drying thereof, the drying loss by weight may be in the region of 10% to 25% and more preferably in the range of 12% to 20%.

The final step of introducing the coated articles into a hot air environment may comprise introducing the coated articles into an impingement oven. The hot air environment may have a temperature of between 240°C to 285°C. The coated articles may be kept in the environment for a period of between 3 to 6 minutes. Again this heating step may be quantified with reference to the weight loss of the coated articles. Preferably the articles experience a weight loss of between 20% to 27%.

According to a second aspect of the present invention there is provided a coating for a potato article the coating comprising:

| | |
|---|---|
| Water | 53.00% - 60.00% |
| Sunflower Oil | 24.00% - 28.00% |
| Food Starch refined from High Amylose Maize - Hylon VII | 10.00% - 12.00% |
| Tumeric | 0.01% - 0.10% |
| Liquid Paprika | 0.01% - 0.10% |
| Whey Protein Concentrate and Buttermilk Powder Emulsifier - Hamultop 391 | 0.80% - 1.00% |
| Guar Gum and Xanthan Gum Stabiliser - H0w 1 | 0.10% - 0.30% |
| Salt | 4.00% - 6.00% |

According to a further aspect of the present invention there is provided a coating for a potato article, the coating being an emulsion comprising:

| | |
|---|---|
| Water | 48.00% - 54.00% |
| Sunflower oil | 13.00% - 16.00% |
| Distarch Phosphate-Modified potato starch E1412 | 9.00% - 11.00% |
| Rice Flour | 5.00% - 7.00% |
| Potato Dextrin | 9.00% - 11.00% |
| Maize Starch | 4.00% - 6.00% |
| Xantham Gum | 0.01% - 0.10% |
| Sodium Bicarbonate | 0.30% - 0.40% |
| Disodium Diphosphate | 0.40% - 0.50% |
| Salt | 1.00% - 2.00% |
| Tumeric Extract Powder | 0.01% - 0.10% |
| Paprika Oleoresin | 0.01% - 0.10% |
| Vegetable Oil | 0.01% - 0.10% |
| Dextrose | 0.30% - 0.40% |
| Guar Gum | 0.01% - 0.10% |

Embodiments of the present invention will now be described by way of illustrative examples.

### EXAMPLE 1

Maris Piper potatoes are steam peeled, trimmed to remove any defects and cut into a desired chip size. Typical examples being chips having a cross section of 11.2 mm by 11.2 mm (15/32 of an inch by 15/32 of an inch).

The chips are then blanched in water at a temperature of around 75°C for 6 minutes.

After blanching the chips are dipped in an aqueous solution containing 1% Puron for 60 seconds at a temperature of around 65°C. Puron is the trade name for Disodium Diphosphate and is used to prevent non-enzymic oxidation of the chips.

The dipped chips are then dried in an elevated temperature environment at around 110°C. During this drying step the chips experience a drying loss of around 4.5%, which is to say that the moisture loss during drying of the chips is ascertainable as a 4.5% reduction in pre-drying step weight.

The dried chips are then coated with a batter emulsion having the following composition:

| | |
|---|---|
| Water | 53.00% - 60.00% |
| Sunflower Oil | 24.00% - 28.00% |
| Starch (Hylon V11) | 10.00% - 12.00% |
| Tumeric | 0.01% - 0.10% |
| Liquid Paprika | 0.01% - 0.10% |
| Hamultop 391 emulsifier | 0.80% - 1.00% |
| H0w 1 stabiliser | 0.10% - 0.30% |
| Salt | 4.00% - 6.00% |

Coating of the chips is achieved using a batter enrober.

The coated chips are then dried at a temperature of around 120°C. During this second drying step the chips experience a drying loss of 12%.

After the second drying the step the coated chips are then partially cooked in an impingement oven at a temperature of between 250°C to 285°C. During this impingement step the chips experience an impingement loss of between 24% and 27%.

The par-cooked chips are then frozen and packaged ready for supply to an end consumer.

The end consumer completes the cooking process by heating the chips from frozen for between 15 minutes and 18 minutes at a temperature of around 220°C.

### EXAMPLE 2

As in the example given above, the potatoes are peeled, trimmed and cut into a chip size. having a cross section of 11.2 mm by 11.2 mm (15/32 of an inch by 15/32 of an inch)

The chips are then blanched in water at a temperature of around 85°C for 13 minutes.

After blanching the chips are dipped in an aqueous solution containing 1% Puron for 60 seconds at a temperature of around 65°C.

The dipped chips are then dried in an ambient temperature environment.

The dried chips are then enrobed with a batter emulsion having the following composition:

| | |
|---|---|
| Water | 48.00% - 54.00% |
| Sunflower oil | 13.00% - 16.00% |
| Modified Potato Starch E1412 | 9.00% - 11.00% |
| Rice Flour | 5.00% - 7.00% |
| Potato Dextrin | 9.00% - 11.00% |
| Maize Starch | 4.00% - 6.00% |
| Xantham Gum | 0.01% - 0.10% |
| Sodium Bicarbonate | 0.30% - 0.40% |
| Puron AG | 0.40% - 0.50% |
| Salt | 1.00% - 2.00% |
| Tumeric Extract Powder | 0.01% - 0.10% |
| Paprika Oleoresin | 0.01% - 0.10% |
| Vegetable Oil | 0.01% - 0.10% |
| Dextrose | 0.30% - 0.40% |
| Guar Gum | 0.01% - 0.10% |

After the second drying the step the coated chips are then partially cooked in an impingement oven at a temperature of around 285°C. During this impingement step the chips experience an impingement loss of 21.8%

The par-cooked chips are then frozen and packaged ready for supply to an end consumer.

The end consumer completes the cooking process by heating the chips from frozen for 15 minutes at a temperature of around 220°C.

## Claims

1. A method of preparing a potato based food product , the method comprising the steps of:
processing potatoes into potato articles having a desired size and shape,
drying said potato articles,
coating said potato articles in an emulsion containing starch, oil, salt and colouring,
introducing said coated articles into a hot air environment; and
removing said articles from said hot air environment, **characterised in that** the method further includes between the processing and drying steps, the steps of:
blanching said potato articles by immersion in a heated water bath, and
dipping said blanched potato articles in a solution to prevent non-enzymic oxidation of the potato articles.

2. A method as claimed in claim 1 wherein the step of blanching the articles comprises immersing the potato articles in a heated water bath at a temperature of between 70°C to 95°C for between 5 minutes to 20 minutes.

3. A method as claimed in claim 1 or claim 2 wherein the step of dipping said blanched potato articles in a solution to prevent non-enzymic oxidation of the potato articles comprises immersing the articles in a Sodium Acid Pyrophosphate solution.

4. A method as claimed in claim 3 wherein the Sodium Acid Pyrophosphate solution comprises 1% Sodium Acid Pyrophosphate.

5. A method as claimed in claim 3 or claim 4 wherein the Sodium Acid Pyrophosphate solution is provided at a temperature of 65°C and the articles are immersed for a time period of around 60 seconds.

6. A method as claimed in any preceding claim wherein the step of drying the blanched and dipped potato articles comprises introducing the articles into an elevated temperature environment.

7. A method as claimed in any of claims 1 to 5 wherein the blanched and dipped potato articles are dried at ambient temperature.

8. A method as claimed in any preceding claim wherein the emulsion comprises a mixture including water, oil, starch, colouring, emulsifier, stabilizer and salt.

9. A method as claimed in claim 8 wherein the emulsion comprises:
| | |
|---|---|
| Water | 53.00% - 60.00% |
| Sunflower Oil | 24.00% - 28.00% |
| Food Starch refined from High Amylose Maize - Hylon VII | 10.00% - 12.00% |
| Tumeric | 0.01% - 0.10% |
| Liquid Paprika | 0.01% - 0.10% |
| Whey Protein Concentrate and Buttermilk Powder Emulsifier - Hamultop 391 | 0.80% - 1.00% |
| Guar Gum and Xanthan Gum Stabiliser - H0w 1 | 0.10% - 0.30% |
| Salt | 4.00% - 6.00% |

10. A method as claimed in any of claims 1 to 8 wherein the emulsion comprises a mixture including water, oil, starch, flour, dextrin, gum, Sodium Bicarbonate, salt, colouring, oil, Sodium Acid Pyrophosphate and dextrose.

11. A method as claimed in claim 10 wherein the emulsion comprises:
| | |
|---|---|
| Water | 48.00% - 54.00% |
| Sunflower oil | 13.00% - 16.00% |
| Distarch Phosphate-Modified potato starch E1412 | 9.00% - 11.00% |
| Rice Flour | 5.00% - 7.00% |
| Maize Starch | 4.00% - 6.00% |
| Xantham Gum | 0.01 % - 0.10% |
| Sodium Bicarbonate | 0.30% - 0.40% |
| Disodium Diphosphate | 0.40% - 0.50% |
| Salt | 1.00% - 2.00% |
| Tumeric Extract Powder | 0.01 % - 0.10% |
| Paprika Oleoresin | 0.01% - 0.10% |
| Vegetable Oil | 0.01% - 0.10% |
| Dextrose | 0.30% - 0.40% |
| Guar Gum | 0.01% - 0.10% |

12. A method as claimed in any preceding claim, the method may including the additional step of drying the potato articles after coating in the emulsion.

13. A method as claimed in claim 12 wherein the second drying step comprises introducing the coated articles into a warm air environment.

14. A method as claimed in claim 13 wherein the coated articles are dried at a temperature of between 100°C and 130°C.

15. A method as claimed in claim 14 wherein the coated articles are dried at a temperature of between 105°C and 120°C.

16. A method as claimed in any preceding claim wherein the final step of introducing the coated articles into a hot air environment comprises introducing the coated articles into an impingement oven.

17. A method as claimed in claim 16 wherein the hot air environment has a temperature of between 240°C to 285°C.

18. A coating for a potato article, the coating being an emulsion comprising:
| | |
|---|---|
| Water | 53.00% - 60.00% |
| Sunflower Oil | 24.00% - 28.00% |
| Food Starch refined from High Amylose Maize - Hylon VII | 10.00% - 12.00% |
| Tumeric | 0.01 % - 0.10% |
| Liquid Paprika | 0.01% - 0.10% |
| Whey Protein Concentrate and Buttermilk Powder Emulsifier - Hamultop 391 | 0.80% - 1.00% |
| Guar Gum and Xanthan Gum Stabiliser - H0w 1 | 0.10% - 0.30% |
| Salt | 4.00% - 6.00% |

19. A coating for a potato article, the coating being an emulsion comprising:
| | |
|---|---|
| Water | 48.00% - 54.00% |
| Sunflower oil | 13.00% - 16.00% |
| Distarch Phosphate-Modified potato starch E1412 | 9.00% - 11.00% |
| Rice Flour | 5.00% - 7.00% |
| Potato Dextrin | 9.00% - 11.00% |
| Maize Starch | 4.00% - 6.00% |
| Xantham Gum | 0.01% - 0.10% |
| Sodium Bicarbonate | 0.30% - 0.40% |
| Disodium Diphosphate | 0.40% - 0.50% |
| Salt | 1.00% - 2.00% |
| Tumeric Extract Powder | 0.01 % - 0.10% |
| Paprika Oleoresin | 0.01 % - 0.10% |
| Vegetable Oil | 0.01% - 0.10% |
| Dextrose | 0.30% - 0.40% |
| Guar Gum | 0.01 % - 0.10% |

## Patentansprüche

1. Verfahren zur Herstellung eines auf Kartoffeln basierenden Nahrungsmittelprodukts, bei dem man:
die Kartoffeln zu Kartoffelartikeln verarbeitet, die eine gewünschte Größe und Form haben,
die Kartoffelartikel trocknet,
die Kartoffelartikel mit einer Emulsion beschichtet, die Stärke, Öl, Salz und Farbstoff enthält,
die beschichteten Artikel in eine Heißluft-Umgebung einbringt;
die Artikel aus der Heißluft-Umgebung entfernt, **dadurch gekennzeichnet, dass** das Verfahren zwischen dem Verarbeitungsschritt und dem Trocknungsschritt Schritte umfasst, bei denen man:
die Kartoffelartikel durch Eintauchen in ein Heißwasserbad abbrüht und die abgebrühten Kartoffelartikel in eine Lösung eintaucht, um die nicht-enzymatische Oxidation der Kartoffelartikel zu vermeiden.

2. Verfahren nach Anspruch 1, bei dem der Schritt des Abbrühens der Artikel das Eintauchen der Kartoffelartikel in ein Heißwasserbad bei einer Temperatur von 70 °C bis 95 °C für 5 bis 20 Minuten umfasst.

3. Verfahren nach Anspruch 1 oder Anspruch 2, bei dem der Schritt des Eintauchens der abgebrühten Kartoffelartikel in eine Lösung zur Vermeidung der nicht-enzymatischen Oxidation der Kartoffelartikel das Eintauchen der Artikel in eine Lösung aus saurem Natriumpyrophosphat umfasst.

4. Verfahren nach Anspruch 3, bei dem die Lösung aus saurem Natriumpyrophosphat 1 % saures Natriumpyrophosphat umfasst.

5. Verfahren nach Anspruch 3 oder Anspruch 4, bei dem die Lösung aus saurem Natriumpyrophosphat bei einer Temperatur von 65 °C bereitgestellt wird, und die Artikel für einen Zeitraum von etwa 60 Sekunden eingetaucht werden.

6. Verfahren nach einem der vorherigen Ansprüche, bei dem der Schritt des Trocknens der abgebrühten und eingetauchten Kartoffelartikel das Einbringen der Artikel in eine Umgebung mit erhöhter Temperatur umfasst.

7. Verfahren nach einem der Ansprüche 1 bis 5, bei dem die abgebrühten und eingetauchten Kartoffelartikel bei Raumtemperatur getrocknet werden.

8. Verfahren nach einem der vorherigen Ansprüche, bei dem die Emulsion eine Mischung umfasst, die Wasser, Öl, Stärke, Farbstoff, Emulgator, Stabilisierungsmittel und Salz umfasst.

9. Verfahren nach Anspruch 8, bei dem die Emulsion Folgendes umfasst:
| | |
|---|---|
| Wasser | 53,00% - 60,00% |
| Sonnenblumenöl | 24,00% - 28,00% |
| Nahrungsmittelstärke, raffiniert aus Mais-Hylon VII mit hohem Amyloseanteil | 10,00% - 12,00% |
| Kurkuma (tumeric) | 0,01% - 0,10% |
| Flüssige Paprika | 0,01% - 0,10% |
| Emulgator aus Molkeproteinkonzentrat | |
| und Buttermilchpulver - Hamultop 391 | 0,80% - 1,00% |
| Guargummi- und Xanthan-Stabilisierungsmittel - H0w 1 | 0,10% - 0,30% |
| Salz | 4,00% - 6,00% |

10. Verfahren nach einem der Ansprüche 1 bis 8, bei dem die Emulsion eine Mischung umfasst, die Wasser, Öl, Stärke, Mehl, Dextrin, Gummi, Natriumbicarbonat, Salz, Farbstoff, Öl, saures Natriumpyrophosphat und Dextrose umfasst.

11. Verfahren nach Anspruch 10, bei dem die Emulsion Folgendes umfasst:
| | |
|---|---|
| Wasser | 48,00% - 54,00% |
| Sonnenblumenöl | 13,00% - 16,00% |
| Distärkephosphat-modifizierte Kartoffel-stärke E1412 | 9,00% - 11,00% |
| Reismehl | 5,00% - 7,00% |
| Maisstärke | 4,00% - 6,00% |
| Xanthan | 0,01% - 0,10% |
| Natriumbicarbonat | 0,30% - 0,40% |
| Dinatriumdiphosphat | 0,40% - 0,50% |
| Salz | 1,00% - 2,00% |
| Kurkumaextraktpulver | 0,01% - 0,10% |
| Paprika-Oleoresin | 0,01% - 0,10% |
| Pflanzenöl | 0,01% - 0,10% |
| Dextrose | 0,30% - 0,40% |
| Guargummi | 0,01% - 0,10% |

12. Verfahren nach einem der vorhergehenden Ansprüche, wobei das Verfahren einen zusätzlichen Schritt umfassen kann, bei dem die Kartoffelartikel nach Beschichten mit der Emulsion getrocknet werden.

13. Verfahren nach Anspruch 12, bei dem der zweite Trocknungschritt das Einbringen der beschichteten Artikel in eine Warmluft-Umgebung umfasst.

14. Verfahren nach Anspruch 13, bei dem die beschichteten Artikel bei einer Temperatur von 100 °C bis 130 °C getrocknet werden.

15. Verfahren nach Anspruch 14, bei dem die beschichteten Artikel bei einer Temperatur von 105 °C bis 120 °C getrocknet werden.

16. Verfahren nach einem der vorhergehenden Ansprüche, bei dem der letzte Schritt des Einbringens der beschichteten Artikel in eine Heißluft-Umgebung das Einbringen der beschichteten Artikel in einen Umwälzofen (impingement oven) umfasst.

17. Verfahren nach Anspruch 16, bei dem die Heißluft-Umgebung eine Temperatur von 240 °C bis 285 °C aufweist.

18. Beschichtung für einen Kartoffelartikel, wobei die Beschichtung eine Emulsion ist, die Folgendes umfasst:
| | |
|---|---|
| Wasser | 53,00% - 60,00% |
| Sonnenblumenöl | 24,00% - 28,00% |
| Nahrungsmittelstärke, raffiniert aus Mais-Hylon VII mit hohem Amyloseanteil | 12,00% |
| Kurkuma (tumeric) | 0,01% - 0,10% |
| Flüssige Paprika | 0,01% - 0,10% |
| Emulgator aus Molkeproteinkonzentrat und Buttermilchpulver - Hamultop 391 | 0,80% - 1,00% |
| Guargummi- und Xanthan-Stabilisierungsmittel - H0w 1 | 0,10% - 0,30% |
| Salz | 4,00% - 6,00% |

19. Beschichtung für einen Kartoffelartikel, wobei die Beschichtung eine Emulsion ist, die Folgendes umfasst:
| | |
|---|---|
| Wasser | 48,00% - 54,00% |
| Sonnenblumenöl | 13,00% - 16,00% |
| Distärkephosphat-modifizierte Kartoffel-stärke E1412 | 9,00% - 11,00% |
| Reismehl | 5,00% - 7,00% |
| Kartoffeldextrin | 9,00% - 11,00% |
| Maisstärke | 4,00% - 6,00% |
| Xanthan | 0,01% - 0,10% |
| Natriumbicarbonat | 0,30% - 0,40% |
| Dinatriumdiphosphat | 0,40% - 0,50% |
| Salz | 1,00% - 2,00% |
| Kurkumaextraktpulver | 0,01% - 0,10% |
| Paprika-Oleoresin | 0,01% - 0,10% |
| Pflanzenöl | 0,01% - 0,10% |
| Dextrose | 0,30% - 0,40% |
| Guargummi | 0,01% - 0,10% |

## Revendications

1. Procédé de préparation d'un produit alimentaire à base de pomme de terre, le procédé comprenant les étapes de :
transformation de pommes de terre en articles à base de pomme de terre ayant une taille et une forme recherchées,
séchage desdits articles à base de pomme de terre,
enrobage desdits articles à base de pomme de terre dans une émulsion contenant de l'amidon, de l'huile, du sel et du colorant,
introduction desdits articles enrobés dans un environnement d'air chaud ; et
élimination desdits articles dudit environnement d'air chaud, **caractérisé en ce que** le procédé comprend en outre entre les étapes de transformation et de séchage, les étapes de :
blanchiment desdits articles à base de pomme de terre par immersion dans un bain d'eau chauffée, et
trempage desdits articles à base de pomme de terre blanchis dans une solution pour prévenir l'oxydation non-enzymatique des articles à base de pomme de terre.

2. Procédé selon la revendication 1 dans lequel l'étape de blanchiment des articles comprend l'immersion des articles à base de pomme de terre dans un bain d'eau chauffée à une température comprise entre 70 °C et 95 °C pendant une période de temps comprise entre 5 minutes et 20 minutes.

3. Procédé selon la revendication 1 ou selon la revendication 2 dans lequel l'étape de trempage desdits articles à base de pomme de terre blanchis dans une solution pour prévenir l'oxydation non-enzymatique des articles à base de pomme de terre comprend l'immersion des articles dans une solution de pyrophosphate acide de sodium.

4. Procédé selon la revendication 3 dans lequel la solution de pyrophosphate acide de sodium comprend 1 % de pyrophosphate acide de sodium.

5. Procédé selon la revendication 3 ou selon la revendication 4 dans lequel la solution de pyrophosphate acide de sodium est à une température de 65 °C et les articles sont immergés pendant une période de temps d'environ 60 secondes.

6. Procédé selon l'une quelconque des revendications précédentes dans lequel l'étape de séchage des articles à base de pomme de terre blanchis et trempés comprend l'introduction des articles dans un environnement de température élevée.

7. Procédé selon l'une quelconque des revendications 1 à 5 dans lequel les articles à base de pomme de terre blanchis et trempés sont séchés à température ambiante.

8. Procédé selon l'une quelconque des revendications précédentes dans lequel l'émulsion comprend un mélange comprenant de l'eau, de l'huile, de l'amidon, du colorant, un émulsifiant, un stabilisant et du sel.

9. Procédé selon la revendication 8 dans lequel l'émulsion comprend :
| | |
|---|---|
| eau | de 53,00 % à 60,00 % |
| huile de tournesol | de 24,00 % à 28,00 % |
| amidon alimentaire raffiné de maïs riche en amylose - Hylon VII | de 10,00 % à 12,00 % |
| curcuma | de 0,01 % à 0,10 % |
| paprika liquide | de 0,01 % à 0,10 % |
| concentré de protéines de sérum et babeurre en poudre émulsifiant - Hamultop 391 | de 0,80 % à 1,00 % |
| stabilisant à base de gomme de guar et gomme de xanthane - H0w 1 | de 0,10 % à 0,30 % |
| sel | de 4,00 % à 6,00 % |

10. Procédé selon l'une quelconque des revendications 1 à 8 dans lequel l'émulsion comprend un mélange comprenant de l'eau, de l'huile, de l'amidon, de la farine, de la dextrine, de la gomme, du bicarbonate de sodium, du sel, du colorant, de l'huile, du pyrophosphate acide de sodium et du dextrose.

11. Procédé selon la revendication 10 dans lequel l'émulsion comprend :
| | |
|---|---|
| eau | de 48,00 % à 54,00 % |
| huile de tournesol | de 13,00 % à 16,00 % |
| phosphate de diamidon - fécule de pomme de terre modifiée E1412 | de 9,00 % à 11,00 % |
| farine de riz | de 5,00 % à 7,00 % |
| amidon de maïs | de 4,00 % à 6,00 % |
| gomme de xanthane | de 0,01 % à 0,10 % |
| bicarbonate de sodium | de 0,30 % à 0,40 % |
| diphosphate de disodium | de 0,40 % à 0,50 % |
| sel | de 1,00 % à 2,00 % |
| poudre d'extrait de curcuma | de 0,01 % à 0,10 % |
| oléorésine de paprika | de 0,01 % à 0,10 % |
| huile végétale | de 0,01 % à 0,10 % |
| dextrose | de 0,30 % à 0,40 % |
| gomme de guar | de 0,01 % à 0,10 % |

12. Procédé selon l'une quelconque des revendications précédentes, le procédé comprenant l'étape supplémentaire de séchage des articles à base de pomme de terre après enrobage dans l'émulsion.

13. Procédé selon la revendication 12 dans lequel la seconde étape de séchage comprend l'introduction des articles enrobés dans un environnement d'air chaud.

14. Procédé selon la revendication 13 dans lequel les articles enrobés sont séchés à une température comprise entre 100 °C et 130°C.

15. Procédé selon la revendication 14 dans lequel les articles enrobés sont séchés à une température comprise entre 105 °C et 120 °C.

16. Procédé selon l'une quelconque des revendications précédentes dans lequel l'étape finale d'introduction des articles enrobés dans un environnement d'air chaud comprend l'introduction des articles enrobés dans un four à jet d'air chaud.

17. Procédé selon la revendication 16 dans lequel l'environnement d'air chaud présente une température comprise entre 240 °C et 285 °C.

18. Enrobage pour un article à base de pomme de terre, l'enrobage étant une émulsion comprenant :
| | |
|---|---|
| eau | de 53,00 % à 60,00 % |
| huile de tournesol | de 24,00 % à 28,00 % |
| amidon alimentaire raffiné de maïs riche en amylose - Hylon VII | de 10,00 % à 12,00 % |
| curcuma | de 0,01 % à 0,10 % |
| paprika liquide | de 0,01 % à 0,10 % |
| concentré de protéines de sérum et babeurre en poudre émulsifiant - Hamultop 391 | de 0,80 % à 1,00 % |
| stabilisant à base de gomme de guar et gomme de xanthane - H0w 1 | de 0,10 % à 0,30 % |
| sel | de 4,00 % à 6,00 % |

19. Enrobage pour un article à base de pomme de terre, l'enrobage étant une émulsion comprenant :
| | |
|---|---|
| eau | de 48,00 % à 54,00 % |
| huile de tournesol | de 13,00 % à 16,00 % |
| phosphate de diamidon - fécule de pomme de terre modifiée E1412 | de 9,00 % à 11,00 % |
| farine de riz | de 5,00 % à 7,00 % |
| dextrine de pomme de terre | de 9,00 % à 11;00 % |
| amidon de maïs | de 4,00 % à 6,00 % |
| gomme de xanthane | de 0,01 % à 0,10 % |
| bicarbonate de sodium | de 0,30 % à 0,40 % |
| diphosphate de disodium | de 0,40 % à 0,50 % |
| sel | de 1,00 % à 2,00 % |
| poudre d'extrait de curcuma | de 0,01 % à 0,10 % |
| oléorésine de paprika | de 0,01 % à 0,10 % |
| huile végétale | de 0,01 % à 0,10 % |
| dextrose | de 0,30 % à 0,40 % |
| gomme de guar | de 0,01 % à 0,10 % |
